# EUROPEAN PATENT APPLICATION

(11) **EP 4 672 588 A1**
(43) Date of publication of application: **31.12.2025**
(21) Application number: 24184338.2
(22) Date of filing: 25.06.2024
(51) Int. Cl.: H02M 7/49, H02M 7/483, H02M 7/501

(54) **POWER CONVERSION DEVICE, POWER CONVERSION METHOD, POWER SUPPLY SYSTEM AND POWER SUPPLY CONTROL METHOD**

(71) Applicant: Munich Electrification GmbH, 81373 Munich (DE)
(72) Inventor: Goede, Stefan, 81373 Munich (DE); González, González Marcos, 81373 Munich (DE)
(74) Representative: Grünecker Patent- und Rechtsanwälte PartG mbB

(57) **Abstract**

The present disclosure relates to a power conversion device, a power supply system comprising a plurality of power conversion devices, a power conversion method, and a power supply control method. The power conversion device (106), comprises a first voltage converter circuit (146), which is electrically connected between a pair of input terminals (132, 134) and a pair of first output terminals (128, 130), wherein the first voltage converter circuit (146) comprises a plurality of switching devices (S1, S2, S3, S4) and is configured to convert an input voltage into a first output voltage having the same or opposite polarity as the input voltage, and a local control circuit (144). The local control circuit (144), in operation, receives from a main control circuit (142), control information including a set of switching parameters over a first communication channel (138), determines switching states for the plurality of switching devices (S1, S2, S3, S4) of the first voltage converter circuit (146) by using the set of switching parameters, receives a synchronization signal over a second communication channel (140), and generates control signals for the plurality of switching devices (S1, S2, S3, S4) of the first voltage converter circuit (146) on the basis of the determined switching states and the synchronization signal.

## Description

The present disclosure relates to a power conversion device, a power supply system comprising a plurality of power conversion devices, a power conversion method, and a power supply control method for facilitating the control of at least one of power supply from and to a plurality of power storage devices in module-based power storage system.

Applications of power storage devices, like lithium-ion batteries are widespread, ranging from driving batteries in electric vehicles (EVs) to storage batteries in stationary energy storage systems.

Typically, in electric vehicles high voltage (HV) batteries are used, which comprise between 80 to 300 battery cells connected in series and/or in parallel, for supplying a DC voltage to the high voltage loads of the electric vehicle, for example including the electric motor. Hereby it is possible to supply high voltages in a range between 400 V and 1000 V. In future applications and in stationary energy storage systems, even higher voltages may be supplied by the high voltage batteries. In electric vehicles, in addition to the high voltage battery, commonly a low voltage auxiliary battery, which provides a low voltage of 12V, 24V or 48V serves as energy reservoir for powering electric loads such as an air conditioning or a lighting system of the electric vehicle.

In order to make the electric energy stored in the high voltage battery and in the low voltage battery, power supply systems comprise multiple power converters, which convert the stored electrical energy from one form to another (e.g. between AC and DC, or by adjusting the voltage and/or the frequency). For example, conventional power supply systems in an electric vehicle comprise an Inverter (DC-AC converter), which creates AC phases for driving the electric motor from the DC voltage supplied by the driving battery, an Onboard Charger (AC-DC converter) to convert an AC input voltage into a DC voltage for charging the high voltage battery with an AC power source and a DC-DC converter that converts the voltage level provided by the auxiliary battery to a 12V (or 24V or 48V) voltage supplying the low voltage bus. Further, there are provided cell monitoring boards, which carry monitoring circuitry allowing a battery management system (BMS) to measure and balance a voltage of each of the cells of the high voltage battery.

However, having a high voltage battery, which is only configured to output a fixed, relatively large predetermined high voltage, possess challenges when trying to optimize critical battery parameters like a charging speed, a battery cycle life, a usable energy of the battery, because all electric components, which operate at the relatively high voltage, like the Inverter and the Onboard Charger operate in a high voltage range. Furthermore, there are also challenges when trying to optimize the packaging efficiency of such HV batteries.

In view of these challenges, it is an object of the present disclosure to provide devices and methods, which facilitate the provision of new battery architectures and the optimization of the critical parameters of a high voltage battery. Further, it is an object to provide a simple and cost-efficient solution.

At least one of these objects is solved by the present invention as defined in the independent claims.

According to a first aspect of the present disclosure, there is provided a power conversion device, which comprises a pair of input terminals for electrically connecting a power storage device, a pair of first output terminals for connecting a load or a power source, a first voltage converter circuit, which is electrically connected between the pair of input terminals and the pair of first output terminals, wherein the first voltage converter circuit comprises a plurality of switching devices and is configured to convert an input voltage into a first output voltage having the same or opposite polarity as the input voltage, and a local control circuit. The local control circuit, in operation, (is configured to) receives, from a main control circuit, control information including a set of switching parameters over a first communication channel, determines switching states for the plurality of switching devices of the first voltage converter circuit by using the set of switching parameters, receives a synchronization signal over a second communication channel, and generates control signals for the plurality of switching devices of the first voltage converter circuit on the basis of the determined switching states and the synchronization signal.

In this manner, the power conversion device allows a main control circuit of a power supply system, which comprises a plurality of the power storage devices, to control driving of an electric motor with the AC voltage directly generated by a plurality of power conversion devices and also to control pulse charging of the power storage devices of the power supply system with power provided by an external charging station. Hereby, the power conversion device can receive the main control information for regulating a first output voltage in a relatively slow and data-intensive first communication channel, while the frequency for applying the main control information can be controlled by transmission of single-bit information in a relative fast second communication channel, for example over an isolated synchronization line. This enables an effective control of the power supply system.

According to a second aspect, the set of switching parameters comprises a bypass timing parameter, which indicates a duration of a bypass state of the first voltage converter circuit, in which the power storage device is bypassed by the first voltage converter circuit, and a supply timing parameter, which indicates a duration of a supply state of the first voltage converter circuit, in which the power storage device supplies the first output terminals or is supplied by the first output terminals.

According to a third aspect, the local control circuit, in operation, (is configured to) controls the first voltage converter circuit to be in the bypass state during a bypass period, which starts from the reception of the synchronization signal and lasts for the duration indicated by the bypass timing parameter, and controls the first voltage converter circuit to be in the supply state during a supply period, which follows the bypass period and lasts for the duration indicated by the supply timing parameter.

According to a fourth aspect, the set of switching parameters comprises a conversion ratio parameter, indicating a duty cycle for switching the plurality of switching devices of the first voltage converter circuit.

According to a fifth aspect, the power conversion further comprises a detection circuit, which in operation, detects a state of the power storage device to generate detection data, and the local control circuit, in operation, (is configured to) generates the detection data, and transmits the detection data over the first communication channel to the main control circuit.

According to a sixth aspect, the power conversion device further comprises a pair of second output terminals for connecting a second load, and a second voltage converter circuit, which is electrically connected between the pair of input terminals and the pair of second output terminals, wherein the second voltage converter circuit comprises at least one switching device and is configured to convert an input voltage into a second output voltage having the same polarity as the input voltage. The local control circuit, in operation, (is configured to) acquires the actual second output voltage, and generates control signals for the at least one switching device of the second voltage converter circuit on the basis of the actual second output voltage.

According to a seventh aspect, the local control circuit, in response to detecting a malfunction of one of the electric components of the power conversion device, in operation, (is configured to) controls the power storage device to be bypassed by the first voltage converter circuit, and transmits a malfunction signal to the main control circuit.

According to an eighth aspect, there is provided a power conversion method comprising the steps of receiving, from a main control circuit, control information over a first communication channel, wherein the control information include a set of switching parameters for a first voltage converter circuit, which comprises a plurality of switching device and is configured to convert an input voltage into a first output voltage having same or opposite polarity as the in-put voltage, determining switching states for the plurality of switching devices of the first voltage converter circuit by using the set of switching parameters, receiving a synchronization signal over a second communication channel, and generating control signals for the plurality of switching devices of the first voltage converter circuit on the basis of the determined switching states and the synchronization signal.

According to a ninth aspect, there is provided a computer program including code instructions, which when executed on one or more processor, causes the one or more processors to execute a method according to the eighth aspect. In an optional implementation of the ninth aspect, the code instructions may be stored on a non-transitory medium.

According to a tenth aspect, there is provided a power supply system, which comprises a plurality of power conversion devices according to any of the preceding claims, wherein each of the plurality of power conversion devices is electrically connected to a power storage device and is configured to output a first output voltage, and a power supply control device, which is communicatively coupled to each local control circuit of the plurality of power conversion devices over a first communication channel and over a second communication channel. The power supply control device comprises a main control circuit, which in operation, (is configured to) determines respective sets of switching parameters for the plurality of power conversion devices and a frequency of the synchronization signal, so as to control the power output of the plurality of power storage devices, transmits, over the first communication channel, to the local controllers of the plurality of power conversion devices control information including the respective sets of switching parameters, and transmits to each of the local controllers the synchronization signal over the second communication channel.

In this manner, the main control circuit of the power supply system, can control driving of an electric motor with the AC voltage directly generated by a plurality of power conversion devices and also to control pulse charging of the power storage devices of the power supply system with power provided by an external charging station. Hereby, the main control circuit can transmit the main control information for regulating a first output voltage in a relatively slow and data-intensive first communication channel, while the frequency for applying the main control information can be controlled by transmission of single-bit information in a relative fast second communication channel, for example over an isolated synchronization line. This enables an effective control of the power supply system.

According to an eleventh aspect, a first part of the plurality of power conversion devices is arranged in a first array connected in a cascaded manner and a second part of the plurality of power conversion device is arranged in a second array connected in a cascaded manner, and the first array and the second array each comprise a dedicated power output terminal, which is electrically connected to only one of the first array and the second array, and a shared power output terminal, which is electrically connected to both the first array and the second array.

According to a twelfth aspect, for charging the power supply system, the plurality of power conversion devices are electrically connected in series, and the main control circuit, in operation, (is configured to) controls the plurality of power conversion devices to selectively charge the respective power storage devices.

According to a thirteenth aspect, the main control circuit, in operation, (is configured to) receives, from the plurality of power conversion devices over the first communication channel, detection data indicating a state of the connected power supply device, and determines the set of switching parameters for each of the plurality of power conversion devices by using the detection data.

According to a fourteenth aspect, the main control circuit, in operation, (is configured to) determines, for each of the plurality of power conversion devices, whether to activate or to deactivate the second voltage converter circuit, and transmits activation or deactivation requests to the plurality of power conversion devices.

According to a fifteenth aspect, the main control circuit, in operation, (is configured to) determines a waveform of an output voltage signal of the plurality of power conversion devices and sets the frequency of the synchronization signal in accordance with the determined waveform.

According to a sixteenth aspect, there is provided a power supply control method comprising the steps of determining respective sets of switching parameters for a plurality of power conversion devices and a frequency of a synchronization signal, so as to control the power output of the plurality of power storage devices, wherein each of the plurality of power conversion devices is electrically connected to at least one of the plurality of power storage devices and is configured to output a first output voltage, transmitting, over a first communication channel, to local controllers of the plurality of power conversion devices control information including the respective sets of switching parameters, and transmitting to each of the local controllers the synchronization signal over a second communication channel.

According to a seventeenth aspect, there is also provided a computer program including code instructions, which when executed on one or more processor, causes the one or more processors to execute a method according to the sixteenth aspect. In an optional implementation of the seventeenth aspect, the code instructions may be stored on a non-transitory medium.

The accompanying drawings are incorporated into the specification and form a part of the specification to illustrate several examples of the present disclosure. These drawings, together with the description serve to explain the principles of the disclosure. The drawings are merely for the purpose of illustrating the preferred and alternative examples of how the disclosure can be made and used, and are not to be construed as limiting the disclosure to only the illustrated and described examples. Furthermore, several aspects of the examples may form-individually or in different combinations-solutions according to the present disclosure. The following described examples thus can be considered either alone or in an arbitrary combination thereof. Further features and advantages will become apparent from the following more particular description of the various examples of the disclosure, as illustrated in the accompanying drawings, in which like references refer to like elements, and wherein:
- **FIG. 1**: illustrates a schematic circuit diagram of a first exemplary power supply system;
- **FIG. 2**: illustrates a part of the schematic circuit diagram of Fig. 1;
- **FIG. 3**: shows a schematic block diagram of an exemplary power conversion module;
- **FIG. 4**: shows a schematic block diagram of another exemplary power conversion module;
- **FIG. 5**: shows a schematic flow chart of a first exemplary power conversion method;
- **FIG. 6**: shows a schematic timing diagram that illustrates an exemplary power supply operation performed by a single exemplary power conversion device;
- **FIG. 7**: shows a schematic timing diagram that illustrates an exemplary power supply operation performed by a plurality of exemplary power conversion devices;
- **FIG. 8**: shows a schematic flow chart of a second exemplary power conversion method;
- **FIG. 9**: shows a schematic timing diagram that illustrates an exemplary charging operation performed by a plurality of exemplary power conversion devices;
- **FIG. 10**: illustrates a schematic circuit diagram of a second exemplary power supply system.

Notably, throughout this document, the term "terminal" is meant to describe a point at which a conductor from an electric device, an electric circuit or an electric component ends, and where a point is provided for electrically connecting an external electric device, an external electric circuit or an external electric component to this conductor. Further, the terms "electrically connected" and "conductively coupled" describe the establishing of an electrical connection between at least two electric devices, electric components or electric conductors, which allows the flow of electric current. Hereby the electrical connection should not be restricted to a direct coupling of the terminals of the at least two electric devices, electric components or electric conductors, but other electric devices, electric components or electrical conductors may be coupled in between.

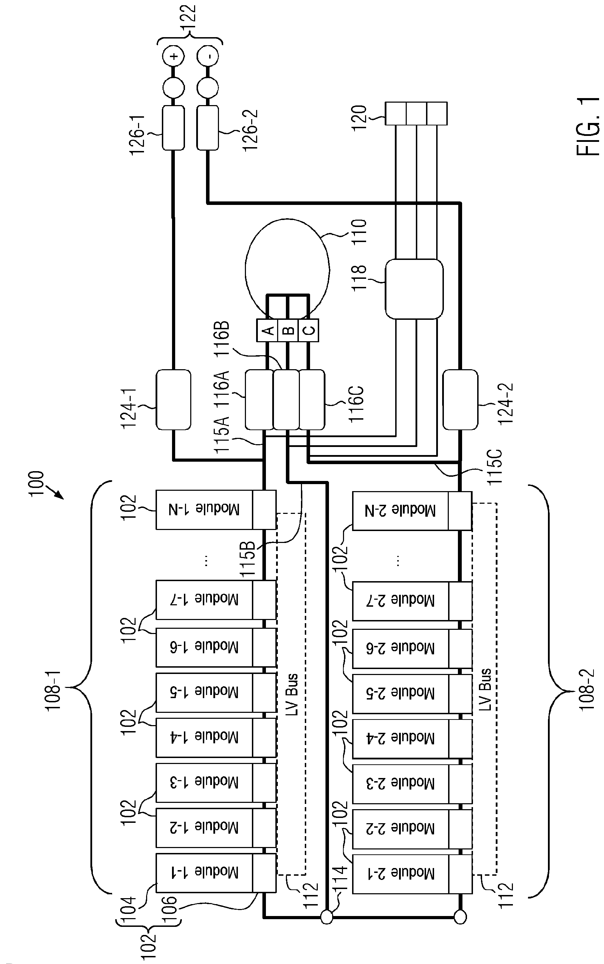

The present disclosure will now be further explained referring to the Figures. Fig. 1 shows a first exemplary power supply system 100. The power supply system 100 is a module based energy storage system, which includes a plurality (at least two) power storage modules (also signified as "power conversion modules") 102. Each power storage module 102 comprises a power storage device 104, which is configured to store electric energy, and a power conversion device 106 (also signified as "power charge monitoring board" or "PCMB"), which is configured to control the energy output (power supply) or the energy input (charging) of the power storage devices 104. The configuration and the operation of the power conversion devices 106 will be described later in detail. To distinguish each of the power storage module 102, the power storage module 102 are signified in Fig. 1 as Module 1-1, Module 1-2, ... Module 1-N from the left to the right side in a first battery string (or array) 108-1 of the power supply system 100 and as Module 2-1, Module 2-2, ... Module 2-N from the left to the right side in a second battery string (or array) 108-2 of the power supply system 100. In particular, the power storage devices 104 of Module 1-1, Module 1-2... Module 1-N are electrical connected in series through the respective power conversion devices 106, which are electrically connected in a cascaded manner, to form the first battery string 108-1 and the power storage devices 104 of Module 2-1, Module 2-2... Module 2-N are electrical connected in series through the respective power conversion devices 106, which are electrically connected in a cascaded manner, to form the second battery string 108-2.

Each of the power storage devices 104 comprises at least one battery cell, for example a battery cell having a lithium ion electrochemistry (e.g. LFP or NMC). Hereby, a battery cell may be a physical battery cell or may comprise several physical battery cells electrically connected in parallel on a cell level. Exemplarily, 5 to 24 battery cells each having a cell voltages in the range of 3.3 V to 4.3 V, may be electrically connected in series to form each of the battery modules 102. Accordingly, in this example each power storage devices 104 may provide a module voltage in the range between around15 V to 100 V. In an exemplary implementation, each of the power storage devices 104 may include 6 battery cells connected in series, i.e., may comprise a 6s configuration. This results in a module voltage of approximately 6 * 4 V = 24V, so that the voltage ratings of the electric components of the connected power conversion devices 106 can have a relatively low voltage rating compared to voltage ratings of electronic components in converter devices in conventional high voltage energy storage systems. However, also a different number of battery cells with a different cell voltage may be electrically connected to form the power storage devices 104. Especially a power storage devices 104 may also be formed of a single battery cell. Furthermore, in an alternative implementation, the power storage device could be a high energy density capacitor, like a ultracapacitor or supercapacitor or could be a fuel cell (e.g. a single fuel cell or multiple fuel cells connected in series or parallel).

In an application scenario exemplarily described here and in the following, the power supply system 100 is used for supplying power to an electric motor 110 and to supply power to a low voltage (LV) bus 112, which may be electrically connected to electric loads, being supplied at a predetermined low voltage, e.g. 12V, 24V or 48, like an air conditioning system or a lightning system. For example, the electric motor 110 is a three-phase synchronous electric motor composed of a first coil set of star-connected three-phase coils A, B, C.

However, it should be noted that the first exemplary power supply 100 may also be used in other application scenarios, especially in stationary power storage systems, where a large amount of power is stored and which are comprised of a large number of battery cells, like in a power grid or an uninterruptible power supply (system).

Referring back to Fig. 1, the first battery string 108-1, which is formed of a first array of the power storage modules 102, is electrically connected by the power storage module 1-1 to a common reference potential 114, and by the power storage module 1-N through a power supply line 115A to a disconnection switch 116A. The disconnection switch 116A enables or interrupts power supply from the first battery string 108-1 to a first phase-coil (or winding) forming a phase A of the electric motor 110. The second battery string 108-2, which is formed of a second array of the power storage module 102, is electrically connected by the power storage module 2-1 to the common reference potential 114, and by the power storage module 2-N through a power supply line 115C to a disconnection switch 116C. The disconnection switch 116C enables or interrupts power supply from the second battery string 108-2 to a third phase-coil (or winding) forming a phase C of the electric motor 110. The common reference potential 114 is electrically connected through a power supply line 115B to a disconnection switch 116B. The disconnection switch 116B enables or interrupts power supply from the common reference potential 114 to a second phase-coil (or winding) forming a phase B of the electric motor 110. In the illustrated example, the disconnection switch 116A functions as a dedicated power output terminal of the first battery string 108-1, which is electrically connected to only the first battery string 108-1, and the disconnection switch 116C functions as a dedicated power output terminal of the second battery string 108-2, which is electrically connected to only the second battery string 108-2. On the other hand, the disconnection switch 116B functions as a shared power output terminal, which is electrically connected to both the first battery string 108-1 and the second battery string 108-2.

For charging the power storage devices 104 of the power storage modules 102, the power conversion devices 106 may receive electric energy from an AC charger (or multi-phase charger) and/or a DC charger, and transfer the received electric energy to the respective power storage devices 104. For this purpose, the power storage modules 102 of the two battery strings 108-1 and 108-2 can be connected by the AC charging terminals 120 to an AC charger (or AC charging station) through an AC charging disconnection device 118. Alternatively, the power storage modules 102 of the two battery strings 108-1 and 108-2 can be connected by the DC charging terminals 122 to a DC charger (or DC charging station) for receiving energy from the DC charger, wherein the energy transfer can be interrupted by the DC charging disconnection devices 124-1 and 124-2 and high voltage overcurrent protection devices (e.g. fuses) 126-1 and 126-2 in emergency cases. The DC charging disconnection device 124-1 is electrically connected between a high potential side (+) DC charging terminal and the Module 1-N of the first battery string 108-1. The DC charging disconnection device 124-2 is electrically connected between a low potential side (-) DC charging terminal and the Module 2-N of the second battery string 108-2. In this manner, the two battery strings 108-1 and 108-2 are electrically connected in series, when charging the power supply system 100 with a DC charger, because the Module 1-1 of the first battery string 108-1 is electrically connected through the common reference potential 114 with the Module 2-1 of the second battery string 108-2.

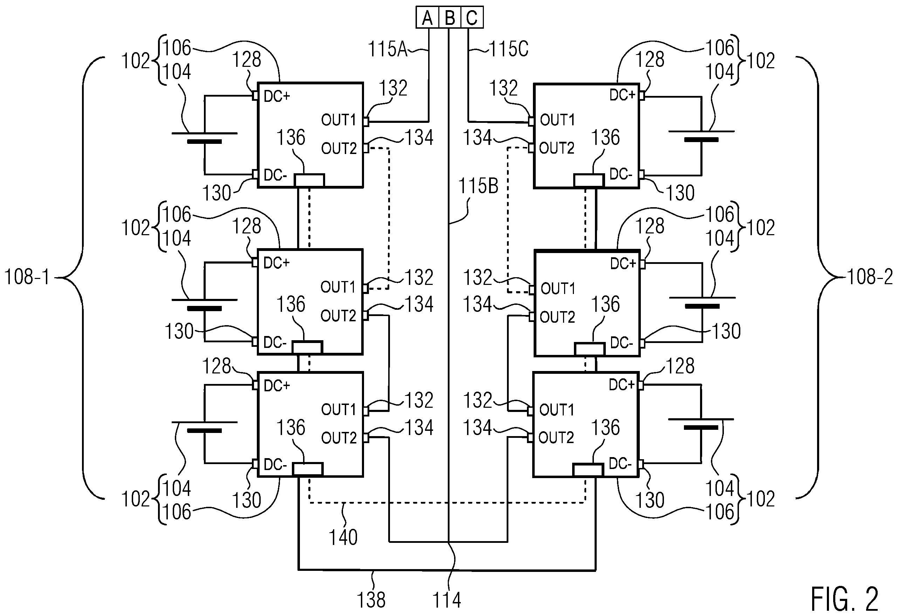

Fig. 2 illustrates a more detailed schematic circuit diagram of the battery strings 108-1 and 108-2 shown in Fig. 1. As illustrated, each of the power conversion devices 106 comprises a pair of input terminals 128 and 130 (DC+ and DC-), which allow to electrically connect the power conversion device 106 to the terminals of a power storage device 104, so that a voltage of a connected power storage device 104 can serve as an input voltage for the power conversion devices 106. Furthermore, each of the power conversion devices 106 comprises a pair of first output terminals 132 and 134 (OUT1 and OUT2), which allow to supply a first output voltage, respectively, to the power supply lines 115A, 115B or 115C, especially when the battery strings 108-1 and 108-2 are driving the electric motor 110 as an electric load, or which allow to electrically connect a power source to the power storage devices 104, especially when the battery strings 108-1 and 108-2 are charged by an AC charger or a DC charger to receive energy. In this respect, it should be noted that throughout this document, the term "output" is used in a broad sense, and does not preclude functioning in a bidirectional manner as both an output and an input. Similarly, the term "input" is used herein in a broad sense, and does not preclude functioning in a bidirectional manner as both an input and an output.

In each of the battery strings 108-1 and 108-2 the power conversion devices 106 connected to the respective power storage devices 104 are connected in a cascaded manner to form two arrays of cascaded power conversion devices 106. In each of the arrays of cascaded power conversion devices 106, an output terminal 132 of a first power conversion device 106 (e.g. Module 1-1 or Module 2-1 in Fig. 1) is electrically connected to an output terminal 134 of a second power conversion device 106 (e.g. Module 1-2 or Module 2-2 in Fig. 1). Then, an output terminal 132 of the second power conversion device 106 (e.g. Module 1-2 or Module 2-2 in Fig. 1) is electrically connected to an output terminal 134 of a third power conversion device 106 (e.g. Module 1-3 or Module 2-3 in Fig. 1), and so on.

In this manner, in the battery string 108-1 the array of cascaded power conversion devices 106 allows to electrically connect the power storage devices 104 of the respective power storage modules 102 (e.g. Module 1-1 to Module 1-N in Fig.1) in series. Accordingly, the output voltage of the battery string 108-1 is the sum of the first output voltages output by the power conversion devices 106 of the power storage modules, which form the battery string 108-1, e.g. Module 1-1 to Module 1-N in Fig.1. In this manner, the battery string 108-1 can function as a multi-level converter, which can output a total output voltage to the power supply line 115A and to the power supply line 115B that is a sum of the individual first output voltages of the power storage modules 102 of the battery string 108-1 (e.g. Module 1-1 to Module 1-N in Fig.1).

In addition, in the battery string 108-2 the array of cascaded power conversion devices 106 allows to electrically connect the power storage devices 104 of the respective power storage modules 102 (e.g. Module 2-1 to Module 2-N in Fig.1) in series. Accordingly, the output voltage of the battery string 108-2 is the sum of the first output voltages output by the power conversion devices 106 of the power storage modules, which form the battery string 108-2, e.g. Module 2-1 to Module 2-N in Fig.1. In this manner, the battery string 108-2 can function as a multi-level converter, which can output a total output voltage to the power supply line 115C and to the power supply line 115B that is a sum of the individual first output voltages of the power storage modules 102 of the battery string 108-2 (e.g. Module 2-1 to Module 2-N in Fig.1).

In order to receive and transmit information between the power conversion devices 106, the power conversion devices 106 are communicatively coupled at communication interfaces 136 over a first communication channel 138 and over a second communication channel 140.

The first communication channel 138 is a communication bus, for example, a CAN (Controller Area Network) bus, in which information is transmitted according to a CAN protocol (like CAN, CANFD or CAN Extended), a SPI (Serial Port Interface) or isoSPI (isolated Serial Port Interface) bus, in which information is transmitted according to an SPI or isoSPI protocol, or an Ethernet bus, in which information is transmitted according to an Ethernet protocol. The first communication channel 138 is a communication channel, which enables the individual power conversion devices 106 to receive control information from a power supply control device of the power supply system 100 and to transmit measurement data to the power supply control device of the power supply system 100. In an exemplary implementation, the first communication channel can also be a wireless communication channel, where communication may performed according to a Bluetooth (registered trademark) standard, a WLAN ("Wireless Local Area Network") standard, in particular through a Wi-Fi ("Wireless Fidelity") standard, or similar.

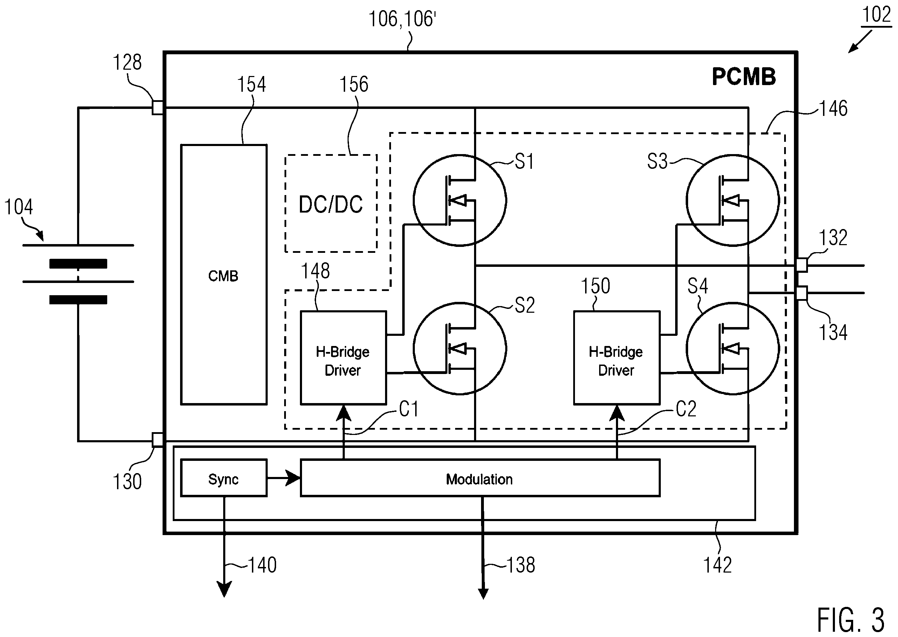

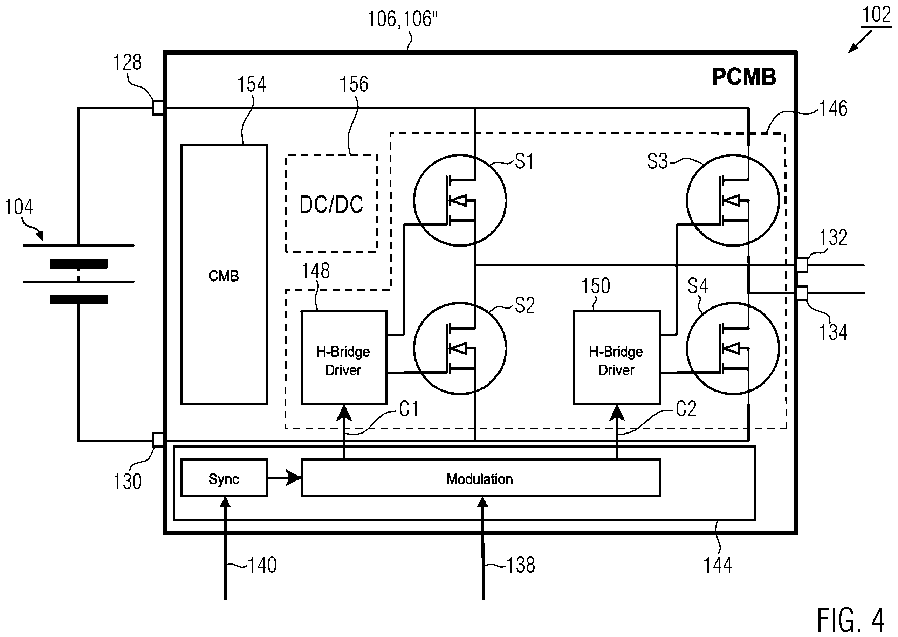

In particular, the first communication channel enables bi-directional communication between the individual power conversion devices 106, especially between a main control circuit 142 (see e.g. power conversion device 106' in Fig. 3) of the power supply system 100, which is arranged on the power supply control device of the power supply system 100, and controls the power supply and the reception of power of the power storage devices 104 centrally in the power supply system 100 and local control circuits 144 (see e.g. power conversion device 106" in Fig.4) of the power supply system 100, which are arranged on the power conversion devices 106", for controlling the supply and/or reception of power for each power storage module 102 individually.

The second communication channel 140 is isolated from the first communication channel 138 and is configured unidirectional connection line, which allows the main control circuit 142 of the power supply system 100 to transmit a synchronization signal, for example in the form of a single bit, to the local control circuits 144 of the power supply system 100. Hereby, it should be noted that the synchronization signal may be transmitted from the main control circuit 142 over the second communication channel 140 separately from an optional clock signal transmitted from the main control circuit 142 to the local control circuits 144 over the first communication channel 138.

The main control circuit 142 functions as a master controller, which determines the total power output or power reception for the power storage modules 102. In accordance with the determination, the main control circuit 142 generates control information and transmits the control information and the synchronization signal to the local control circuits 144, which are arranged on the power conversion devices 106 (see e.g. power conversion device 106" in Fig. 4. The main control circuit 142 can be arranged on one of the power conversion devices 106 (see e.g. power conversion device 106' in Fig. 3) serving as the power supply control device of the power supply system 100. In this case, the main control circuit 142 also functions as the local control circuit of this specific power conversion device 106'. Alternatively, the main control circuit 140 can be arranged on a dedicated power supply control device of the power supply system 100, like a battery management system (BMS) of the power supply system 100.

Fig. 3 show schematic block diagrams of exemplary power storage modules 102, which both include a power conversion device 106 electrically connected to a power storage device 104. Here, Fig. 3 shows an example of a power conversion device 106' being equipped with the main control circuit 142 of the power supply system 100, and Fig. 4 shows the power conversion device 106" being equipped with one of the local control circuits 144 of the power supply system 100.

The functionalities of the main control circuit 142 and the local control circuits 144 may be realized by software, hardware, or software in cooperation with hardware. For example, the main control circuit 142 and the local control circuits 144 may comprises a processor, like a micro-controller and a memory, like a ROM (Read Only Memory), or a RAM (Random Access Memory). In another example, the main control circuit 142 and the local control circuits 144 may be realized by using general-purpose processors, like microcontroller, special-purpose processors, or FPGAs (Field Programmable Gate Array) that can be programmed. Furthermore, each circuit of the power conversion device 106 can be realized as a dedicated integrated circuit and the dedicated integrated circuits are assembled to form the power conversion device 106. Alternatively, the functionalities of each circuit may be integrated into a common integrated circuit, which forms the power conversion device 106.

The power conversion devices 106 comprises a first voltage converter circuit 146, which is configured to convert an input voltage received from the input terminals 128 and 130 to a first output voltage, which is output to the first output terminals 132 and 134, wherein the first output voltage can have the same or the opposite polarity as the input voltage. In particular, the first voltage converter circuit 146 is at configured to output at least three levels of first output voltages, namely a first output voltage VM equal to the input voltage provided by the power storage device 104 of the power storage module 102, a first output voltage -VM being equal to the input voltage provided by the power storage device 104 of the power storage module 102 with opposite polarity, and a first output voltage being equal to zero, i.e. where the power storage device 104 of the power storage module 102 is bypassed.

As illustrated in Figs. 3 and 4, in an exemplary implementation, the first voltage converter circuit 146 comprises four switch devices (e.g. semiconductor switches like MOSFETs) S1, S2, S3 and S4 that form an H-bridge circuit electrically connected between the input terminals 128 and 130 and the first output terminals 132 and 134. In particular, the H-bridge circuit includes a first switch device S1 electrically connected between the input terminal 128 and the first output terminal 132, a second switch device S2 electrically connected between the input terminal 130 and the first output terminal 132, a third switch device S3 electrically connected between the input terminal 128 and the first output terminal 134, and a fourth switch device S4 electrically connected between the input terminal 130 and the first output terminal 134.

For allowing to manipulate the voltage level of the first output voltage, the first voltage converter circuit 146 comprises at least one driving circuit, which is configured to open and close the switch devices of the first voltage converter circuit 146 by supplying PWM modulated voltage signals to the switch devices of the first voltage converter circuit 146. In the illustrated example, the first voltage converter circuit 146 comprises a first driving circuit 148, which supplies PWM modulated voltage signals to the switching devices S1 and S2 to open and close the switching devices S1 and S2, and a second driving circuit 150, which supplies PWM modulated voltage signals to the switching devices S3 and S4 to open and close the switching devices S3 and S4. The PWM modulated signals are generated by the first driving circuit 148 and by the second driving circuit 150 on the basis of control signals C1 and C2 received from the local control circuit 144 of the power conversion device 106". In an alternative implementation, the first voltage converter circuit 146 may not comprise a driving circuit. In this alternative implementation, the local control circuit 144 may directly supply PWM modulated voltage signals to the switching devices of the first voltage converter circuit 146 as control signals for controlling opening and closing of the switching devices.

For monitoring the state of the power storage device 104 locally in each power storage module 102, each of the power conversion devices 106 can comprise a monitoring circuit (also signified as "detection circuit") 154, which is configured to measure the voltages and the temperatures of the battery cells of the connected power storage device 104. For this purpose, the monitoring circuit 154 comprises one or more measurement circuits e.g. one or more ADCs. Optionally, the monitoring circuit 154 may also be electrically connected to suitable external or internal sensors for measuring other power storage module parameters, such as a temperature, a humidity, a pressure, a gas concentration or a fluid level. Each of the power storage module parameters may be measured for the power storage module 102, for all battery cells of the power storage module 102, or for a part of the battery cells of power storage module 102. In addition, the monitoring circuit 154 may comprise balancing circuits, e.g. in the form of resistors, for balancing the voltages of the battery cells of the connected power storage device 104.

The monitoring circuit 154 is connected to the local control circuit 144 to allow the local control circuit 144 to detect a state of the connected power storage device 104 based on the voltages and temperatures of the battery cell measured by the monitoring circuit 154, as well as to allow the local control circuit 144 to balance the voltages of the battery cells of the connected power storage device 104.

In order to allow the main control circuit 142 to remotely monitor the states of (or at least a part of) the plurality of power storage devices 104 of the power supply system 100, the local control circuits 144 of the power supply system 100 generate detection data, which are indicative of the state (e.g. voltage, temperature or another power storage module parameter) of the respective power storage device 104 and transmits the detection data to the main control circuit 142 over the first communication channel 138. The main control circuit 143 receives the detection data from the plurality of (or at least a part of) the plurality of local control circuits 144 of the power supply system 100.

While the local control circuit 144 is configured to control the switching states of the switching devices of the first voltage converter 146 of an individual power conversion device 106", the main control circuit 142 controls the plurality of local control circuits 144 of the power supply system 100, so as to control power output (i.e. power supply and power reception) of the plurality of power storage devices 104 of the power storage modules 102, which form the battery strings 108-1 and 108-2 of the power supply system 100.

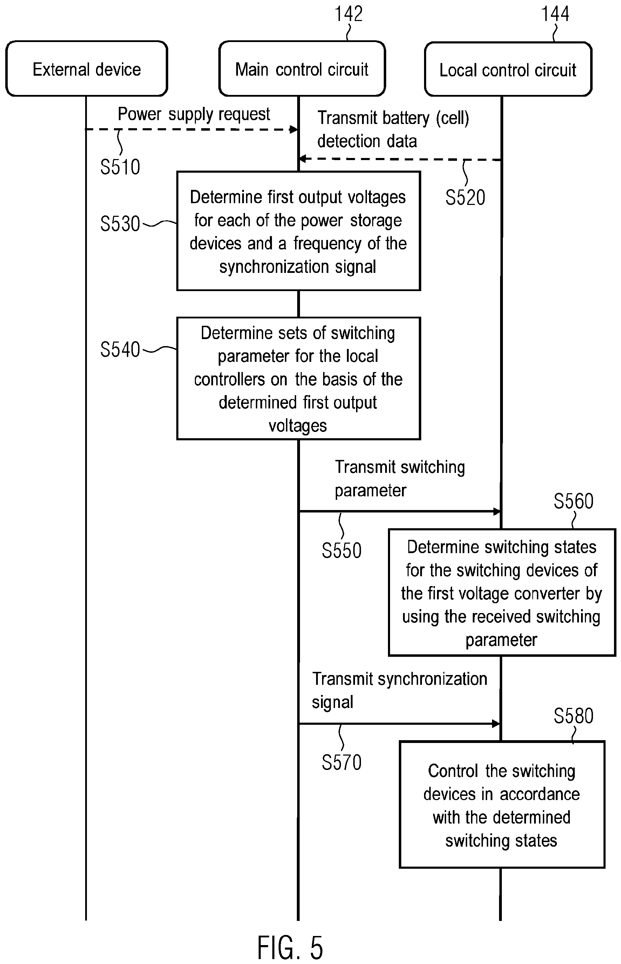

Fig. 5 shows a schematic flow chart of a first exemplary power conversion method, which is performed in the power supply system 100 by the main control circuit 142 and the plurality of local control circuits 144 for supplying power to drive the electric motor 110. In a first optional step S510, the main control circuit 142 receives a power supply request from an external device, for example the main control circuit 142 receives a torque request and/or a speed request from a vehicle ECU, which controls the speed of an electric vehicle, which is driven by the power supply system 100. In a second optional step S520, the main control circuit 142 receives from at least one of the local control circuits 144 of the power supply system 100, detection data indicating the detected status of the respective power storage device(s) 104.

In step S530, the main control circuit 142 determines the first output voltages for each of the power storage devices 106 and determines a frequency for the synchronization signal, which is transmitted over the second communication channel 140. In particular, the main control circuit 142 determines a waveform for the output voltages respectively supplied to the phases A, B, C of the motor 110. For generating current of the determined waveform on the power supply lines 115A, 115B, and 115C, the main control circuit 142 determines a duration of an On-timing for each of the power conversion devices 106, i.e. a duration where the respective power conversion device 106 outputs a non-zero first output voltage, and determines a duration of an Off-timing for each of the power conversion devices 106, i.e. a duration where the respective power conversion device 106 outputs zero first output voltage. In the present example, the waveform of the AC output voltage respectively supplied to the phases A, B, C of the motor 110 may be for example determined on the basis of the requested torque or vehicle speed indicated by the received power supply request. In addition, when determining the On-timings for each of the power conversion devices 106, the main control circuit 142 may also consider the states of the power storage devices 104 received in the detection information, for example to perform active charge balancing between the power storage devices 104, or to adapt the On-timings on the basis of the temperatures of the individual power storage devices 104.

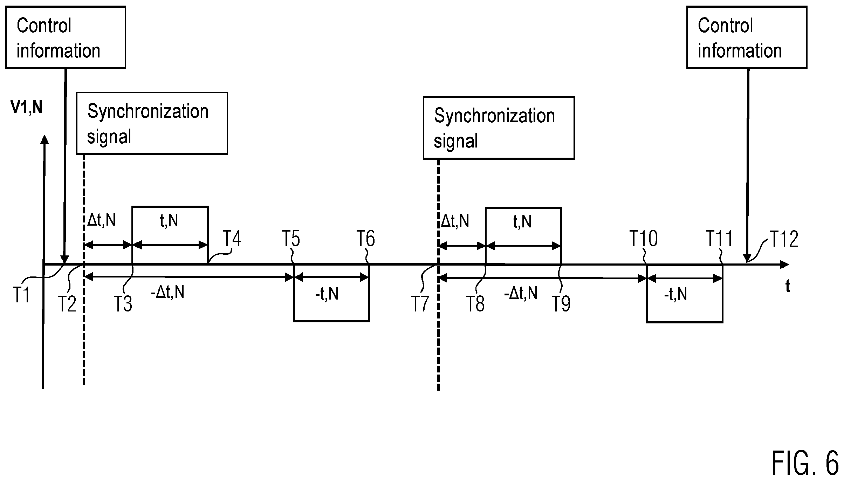

In step S540, the main control circuit 142 determines a set of switching parameters for each of the local control circuits 144 of the power supply system on the basis of the determined first output voltages required to supply the motor 110. The switching parameters may comprise a bypass timing parameter (or delay timing parameter) Δt,N which indicates a duration of an Off-timing (bypass state), i.e. supply of zero first output voltage, for the N-th power conversion device 106 between the reception of the synchronization signal and an On-timing for the N-th power conversion device 106. Further, the switching parameters may comprise a supply timing parameter t,N, which indicates a duration of the On-timing for the N-th power conversion device 106, which starts after the Off-timing has been lapsed (see e.g. Fig. 6). Accordingly, the supply timing parameter t,N indicates a duration of a supply state of the first voltage converter 146, in which the power storage device 104 supplies power to the first output terminals 132 and 134. The main control circuit 142 may determine the bypass timing parameter and the supply timing parameter respectively for positive voltage output and for negative voltage output of the first output voltage of the power conversion devices 106.

Optionally, the set of switching parameters may also include a conversion ratio parameter, indicating a duty cycle for switching the plurality of switching devices S1, S2, S3, S4 of the first voltage converter 146 during the On-timing of the N-th power conversion device 106. For example, if the duty cycle indicated by the conversion ratio parameter is 100%, then the power conversion device 106 outputs the first output voltage during the entire duration of the On-timing at the voltage level VM (or-VM) equal to the input voltage provided by the power storage device 104. If the duty cycle indicated by the conversion ratio parameter is below 100%, the local control circuit 144 of the N-th power conversion device 106 may control the level of the first output voltage to be lower than the voltage level VM (or -VM) of the input voltage provided by the power storage device 104, by providing pulse-width modulated signals to the switching devices S1, S2, S3 and S4 of the first voltage converter 146.

In step S550, the main control circuit 142 transmits control information including the sets of switching parameters over the first communication channel 138 to (at least one of) the local control circuits 144 and the (at least one of the) local control circuits 144 receive the control information including the at least the set of switching parameters determined for the corresponding power conversion device 106.

In step S560, the local control circuit 144, which has received the set of switching parameters, determines switching states for the switching devices S1, S2, S3 and S4 to control the output voltage of the first voltage converter 146 of the corresponding power conversion device 106. In particular, the local control circuit 144 of the N-th power conversion device determines switching states for controlling the switching devices S1, S2, S3 and S4 of the first voltage converter circuit 146 to output a first output voltage equal to zero during the Off-timing (bypass state), which starts from the reception of the synchronization signal and lasts for the duration indicated by the bypass timing parameter (or delay timing parameter) Δt,N, as a bypass period. Further, the local control circuit 144 determines switching states for controlling the switching devices S1, S2, S3 and S4 of the first voltage converter circuit 146 to output a non-zero first output voltage during the On-timing (supply state), which subsequently follows the bypass period and lasts for the duration indicated by the supply timing parameter t,N, as a supply period. In addition, if the conversion ratio parameter is present in the set of switching parameters, the local control circuit 144 may determine PWM duty ratios for controlling the switching devices S1, S2, S3 and S4 to adapt the voltage level of the first output voltage during the supply period.

In step S570, the main control circuit 142 transmits the synchronization signal over the second communication channel 140, and the local control circuits 144 of the power supply system 100 receive the synchronization signal.

In step S580, the local control circuit 144 control the switching devices S1, S2, S3 and S4 by generating control signals for the switching devices S1, S2, S3 and S4 on the basis of the determined switching states and the received synchronization signal. For example, the local control circuit 144 controls the first voltage converter circuit 146 to be in a bypass state, i.e. to output first output voltage equal to zero, during the Off-timing by switching the switching devices S1, S2, S3 and S4 accordingly. In the bypass state, alternatively or in addition, the local control circuit 144 may also close an optional bypass switch, which may be provided for short-circuiting the first output terminals 132 and 134, when being closed. Further, the local control circuit 144 controls the first voltage converter circuit 146 to be in the supply state, i.e. to output a non-zero first output voltage, during the On-timing by switching the switching devices S1, S2, S3 and S4 accordingly. If the conversion ratio parameter is present in the set of switching parameters, the local control circuits 144 in addition controls the switching devices S1, S2, S3 and S4 according to the determined PWM duty ratios during the On-timing.

Fig. 6 illustrates a simplified timing diagram of the first voltage output V1,N of a single (exemplary, the N-th) power conversion device 106 (or power storage module 102) during an exemplary power supply operation of the power supply system 100. At a timing T1, the local control circuit 144 of the N-th power conversion device 106 receives control information including a set of switching parameters, here including at least a first bypass timing parameter Δt,N and a first supply timing parameter t,N for determining a timing for supply of a non-zero first output voltage with positive polarity, and a second bypass timing parameter-Δt,N, and a second supply timing parameter -t,N for determining a timing for supply of a non-zero first output voltage with negative polarity. At a timing T2, the local control circuit 144 of the power conversion device 106 receives the synchronization signal from the main control circuit 142. Following, the local control circuit 144 controls the power conversion device 106 to output zero first output voltage (i.e. to bypass the connected power storage device 104) for the duration indicated by the first bypass timing parameter Δt,N. When the duration indicated by the first bypass timing parameter Δt,N has lapsed at a timing T3, the local control circuit 144 controls the power conversion device 106 to output a non-zero first output voltage at a constant voltage level V1,N for the duration indicated by the first supply timing parameter t,N, i.e. until the duration indicated by the first supply timing parameter t,N has lapsed at a timing T4.

Starting from timing T4, the local control circuit 144 controls the power conversion device 106 again to output zero first output voltage (i.e. to bypass the connected power storage device 104) until the duration indicated by the second bypass timing parameter -Δt,N has lapsed at a timing T5. Starting from timing T5, the local control circuit 144 controls the power conversion device 106 to output a non-zero first output voltage at a constant voltage level -V1,N for a duration indicated by the second supply timing parameter-t,N, i.e. until the duration indicated by the second supply timing parameter -t,N has lapsed at a timing T6.

At a timing T7, the local control circuit 144 of the power conversion device 106 again receives the synchronization signal from the main control circuit 142 and the operation is repeated with the same switching parameters. At a timing T12, the local control circuit 144 may receive control information, including a new set of switching parameters, and the local control circuit 144 may determine new switching states for the switching devices S1, S2, S3 and S4, for the period starting from the reception of the next synchronization signal.

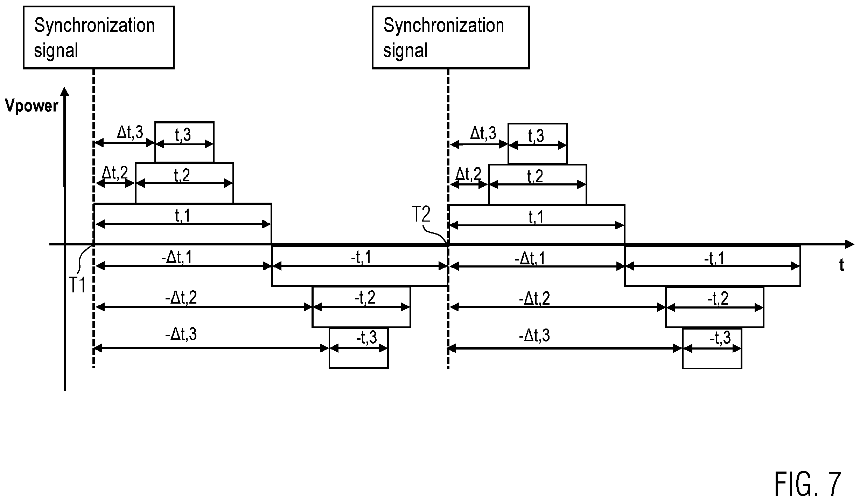

Fig. 7, for illustration purposes, illustrates an approximation of a sinusoidal output voltage Vpower, being generated by switching the different output voltages of three power conversion devices 106 (or power storage modules 102) being electrically connected in series on one of the battery strings 108-1 and 108-2. Here, it is assumed that each of the local control circuits 144 of the three power conversion devices 106 have received sets of switching parameters before the reception of the synchronization signal at timing T1. Based on the received sets of switching parameters, the local control circuits 144 of the three power conversion devices 106 determine and apply the timing for supply of a non-zero first output voltage with positive polarity and with negative polarity in accordance with the operation described above with respect to Figs. 5 and 6 by starting from the reception of the synchronization signal at the timings T1 and T2 as respective starting points.

As illustrated in the simplified example of Fig. 7, with the control concept of the present disclosure, it is possible for the main control circuit 142 to control the power storage modules 102 to generate sinusoidal AC voltage on each of the three power supply lines 115A, 115B and 115C. Accordingly, by using the power conversion devices 106 in the power supply system 100, it is possible to directly drive the electric motor 110 with the AC voltage generated by the plurality of power conversion devices 106 of the power supply system 100 and dispense the need for providing a high voltage DC-DC converter, a motor Inverter and a high voltage DC link capacitor. Accordingly, the space and weight requirements in a vehicle motor supply system may be reduced. In particular, the main control circuit 142 can determine the switching parameters (-)Δt,N, (-)t,N and the conversion ratio parameter for the plurality of power conversion devices 106 individually and in this manner control the generation of AC voltages for driving the electric motor 110.

By varying the set of switching parameters for the different power conversion devices 106, the main control circuit 144 can influence the magnitude of the generated AC voltage signals. In addition, by varying the frequency of transmitting the synchronization signal, the main control circuit 144 can influence the frequency of the generated AC voltage signals.

In the exemplary power supply system 100, which is illustrated in Fig. 1, the main control circuit 142 for example controls the power conversion devices 106, which are arranged to form the first battery string 108-1 (i.e. the power conversion devices 106 of Module 1-1 to Module 1-N), to generate an AC voltage signal to be applied to the first phase-coil (or winding) forming the phase A of the electric motor 110. Similar, the main control circuit 142 for example controls the power conversion devices 106, which are arranged to form the second battery string 108-2 (i.e. the power conversion devices 106 of Module 2-1 to Module 2-N), to generate an AC voltage signal to be applied to the third phase-coil (or winding) forming the phase C of the electric motor 110. Because the first battery string 108-1 and the second battery string 108-2 are electrically connected to the common reference potential 114, the AC voltage signal to be applied to the second phase-coil (or winding) forming the phase B of the electric motor 110 can be generated as a superposition between the phase-to phase voltage generated by the first battery string 108-1 between phase A and phase B and the phase-to phase voltage generated by the second battery string 108-2 between phase B and phase C.

The multi-level converter topology of the cascaded power conversion devices does not only allow for the direct generation of AC voltage signals from the power storage modules 102 for driving the electric motor 110, but also may allow for pulse charging the power storage devices 104.

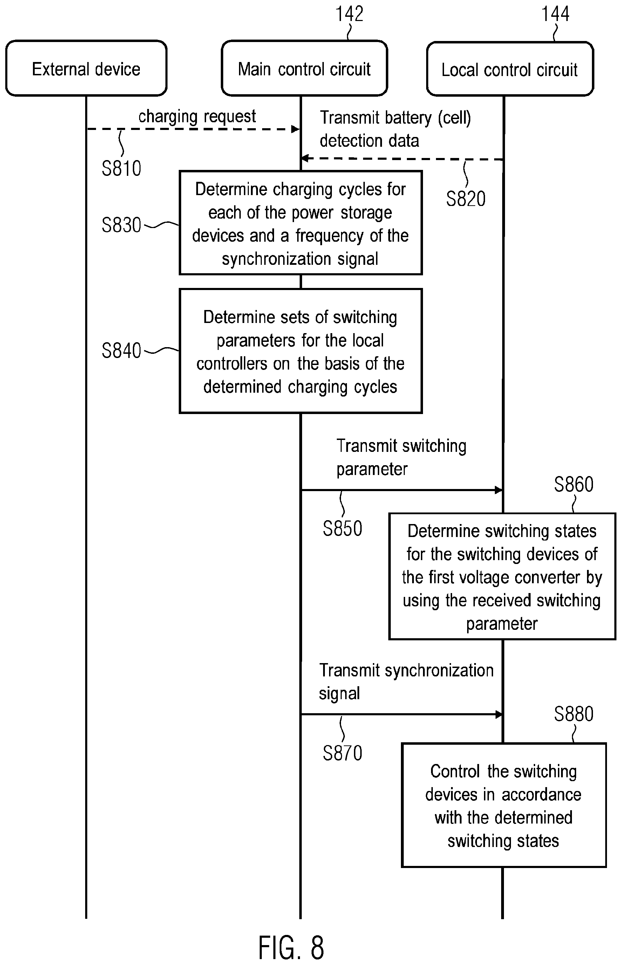

Fig. 8 shows a schematic flow chart of a second exemplary power conversion method, which is performed in the power supply system 100 by the main control circuit 142 and the plurality of local control circuits 144 for charging the power storage devices 104 or in other words for supplying electric power to the power storage devices 104. In a first optional step S810, the main control circuit 142 receives a charging request from an external device, for example the main control circuit 142 receives a power request or a current request from an external EV charging station, to which the power supply system 100 is connected. In a second optional step S820, the main control circuit 142 receives, from at least one of the local control circuits 144, detection data indicating the detected status of the respective power storage device(s) 104 connected to the at least one of the local control circuits 144.

In step S830, the main control circuit 142 determines charging cycles for each of the power storage devices 106 and determines a frequency for the synchronization signal, which is transmitted over the second communication channel 140. In particular, the main control circuit 142 determines a waveform for the charging voltage applied to each of the power storage modules 102. For charging the power storage modules with the determined waveform the main control circuit 142 determines a duration of an On-timing (supply state) for each of the power conversion devices 106, i.e. a duration where the respective power conversion device 106 receives (is charged with) a non-zero first output voltage, and determines a duration of an Off-timing (bypass state) for each of the power conversion devices 106, i.e. a duration where the respective power conversion device 106 suspends charging of the respective power storage device 104. In the present example, the charging voltages respectively supplied to the power conversion devices 106 and the charging durations for the individual power conversion devices 106 may be determined based on the charging power or charging current provided by the external device, which could be indicated in the charging request. In addition, when determining the On-timings for each of the power conversion devices 106, the main control circuit 142 may also consider the states of the power storage devices 104 received in the detection information, to perform active charge balancing between the power storage devices 104, or to adapt the On-timings on the basis of the temperatures of the individual power storage devices 104.

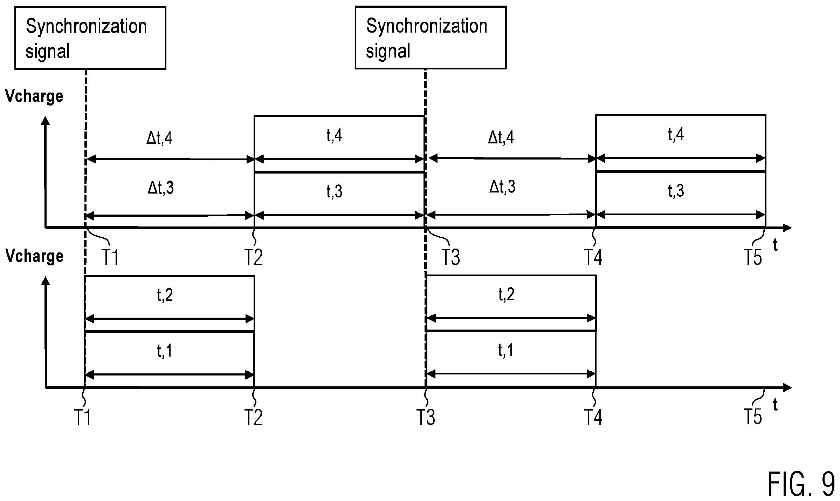

In step S840, the main control circuit 142 determines sets of switching parameters for the local control circuits 144 of the power supply system on the basis of the determined charging cycles. Again, the switching parameters may comprise a bypass timing parameter (or delay timing parameter) Δt,N which indicates a duration of an Off-timing (bypass state), i.e. suspension of charging, for the N-th power conversion device 106 between the reception of the synchronization signal and an On-timing of the N-th power conversion device 106. Further, the switching parameters may comprise a supply timing parameter t,N, which indicates a duration of the On-timing of the N-th power conversion device 106, which starts after the Off-timing has been lapsed (see e.g. Fig. 9). Accordingly, the supply timing parameter t,N indicates a duration of a supply state of the first voltage converter circuit 146, in which the power storage device 104 is supplied and receives electric power, e.g. from a EV charging station connected to the first output terminals 132 and 134.

In step S850, the main control circuit 142 transmits control information including the sets of switching parameters over the first communication channel 138 to (at least one of) the local control circuits 144 and (the at least one of) the local control circuits 144 receive the control information including the respective set of switching parameters determined for the corresponding power conversion device 106.

In step S860, the local control circuit 144, which has received the set of switching parameters, determines switching states for the switching devices S1, S2, S3 and S4 of the first voltage converter circuit 146 to control the charging of the corresponding power storage device 104. In particular, the local control circuit 144 determines switching states for controlling the switching devices S1, S2, S3 and S4 of the first voltage converter circuit 146 to suspend charging the connected power storage device 104 during the Off-timing (bypass state), which starts from the reception of the synchronization signal and lasts for the duration indicated by the bypass timing parameter (or delay timing parameter) Δt,N, as a bypass period. Further, the local control circuit 144 determines switching states for controlling the switching devices S1, S2, S3 and S4 of the first voltage converter circuit 146 to charge the connected power storage device 104 during the On timing (supply state), which follows the bypass period and lasts for the duration indicated by the supply timing parameter t,N, as a supply period.

In step S870, the main control circuit 142 transmits the synchronization signal over the second communication channel 140, and the local control circuits 144 of the power supply system 100 receive the synchronization signal.

In step S880, the local control circuits 144 control the switching devices S1, S2, S3 and S4 by generating control signals for the switching devices S1, S2, S3 and S4 on the basis of the determined switching states and the synchronization signal. For example, the local control circuit 144 controls the first voltage converter circuit 146 to be in the bypass state, i.e. to charge the connected power storage device 104, during the bypass period by switching the switching devices S1, S2, S3 and S4 accordingly. In the bypass state, alternatively or in addition, the local control circuit 144 may also close an optional bypass switch, which may be provided for short-circuiting the first output terminals 132 and 134, when being closed. Further, the local control circuit 144 controls the first voltage converter circuit 146 to be in the supply state, i.e. to charge the connected power storage device 104, during the supply period by switching the switching devices S1, S2, S3 and S4 accordingly.

Fig. 9 for illustration purposes illustrates a charging operation of four power conversion devices 106 (or power storage modules 102), in the following signified as power conversion devices 106-1, 106-2, 106-3 and 106-4, being electrically connected in series in the power supply system 100. Here, it is assumed that each of the local control circuits 144 of the four power conversion devices 106 has received a set of switching parameters before the reception of the synchronization signal at a timing T1. The sets of switching parameters include at least a first bypass timing parameter Δt,N and a first supply timing parameter t,N for allowing the local control circuit 144 of power conversion device 106-N to determine the On-timing(s), in which the connected power storage device 104 is charged. In the illustrated example, the local control circuit 144 of the power conversion device 106-1 and 106-2 control the switching devices S1, S2, S3 and S4 to charge the connected power storage devices 104 starting from the timing T1 until the timing T2 (and starting from the timing T3 until the timing T4) in accordance with the durations indicated by the bypass timing parameters Δt,1 and Δt,2 (which here indicate 0 delay timing), and the supply timing parameters t,1 and t,2. In addition, the power conversion devices 106-3 and 106-4 control the switching devices S1, S2, S3 and S4 to charge the connected power storage devices 104 starting from the timing T2 until the timing T3 (and starting from the timing T4 until the timing T5) in accordance with the durations indicated by the bypass timing parameters Δt,3 and Δt,4, and the supply timing parameters t,3 and t,4. Accordingly, the power storage device 106-1 and 106-2 charge the connected power storage devices 104, when the power storage device 106-3 and 106-4 suspend charging of the connected power storage devices 104, and vice versa. The local control circuits 144 repeat the charging cycles with the same parameters after each reception of the synchronization signal, until control information including new switching parameters is received. Then, the local control circuit 144 may determine new switching states for the switching devices S1, S2, S3 and S4, for the period starting from the reception of the next synchronization signal.

As illustrated in the simplified example of Fig. 9, with the control concept of the present disclosure, it is possible for the main control circuit 142 to selectively control, which of the power storage devices 104 of the power supply system are charged, by determining corresponding sets of switching parameter for the plurality of power conversion devices 106. In this manner, it is possible to control pulse charging of the plurality of power storage devices 104 by alternately charging the plurality of power storage devices 104 for a first predetermined amount of time (e.g. 1 ms) at the high power provided by an external EV charging station and suspending charging of the plurality of power storage devices 104 for a second predetermined amount of time (e.g. 1 ms). For example, in the configuration of the power supply system 100 shown in Fig. 1, the main control circuit 142 can control all of the power storage devices 104 in series at a same timing for the first predetermined amount of time. For example, if the power supply system 100, comprises 30 power storage modules 102 each having one power storage device 104 with 6 battery cells electrically connected in series (i.e. in a 6s configuration), all power storage device 104 may be (pulse) charged in series with a total DC voltage of 30 * 6 * 4 V = 720 V.

Alternatively, the main control circuit 142 can control, especially when an EV charging station provides lower power than required for charging all power storage devices 104 of the power supply system 100 in series, to charge only a fraction of the power storage devices 104 at a same timing. For example, if the power supply system 100, comprises 30 power storage modules 102 each having one power storage device 104 with 6 battery cells electrically connected in series (i.e. in a 6s configuration), a first half of the power storage device 104 may be (pulse) charged with a charging voltage of 15 * 6 * 4 V = 360 V, while a second half of the power storage device 104 may be bypassed by the connected power conversion devices 106 during the charging of the first half of the power storage device 104. After a predetermined pulse charge period (e.g. 1 ms) has lapsed, the charging may be switched to charge the second half of the power storage device 104 with the charging voltage of 15 * 6 * 4 V = 360 V, while the first half of the power storage device 104 may be bypassed by the connected power conversion devices 106. Then after the predetermined pulse charge period (e.g. 1 ms) has lapsed again, the charging may be switched back to charge the first half of the power storage device 104, while the second half of the power storage device 104 is bypassed and so on. As another alternative example, it could be possible to alternately (and selectively) charge 2/3 of the power storage devices 104, here with a charging voltage of 20 * 6 * 4 V = 480 V, while the remaining 1/3 of the power storage devices 104 is bypassed.

In this manner, it is possible to selectively pulse charge the plurality of power storage devices 104 at a relatively constant charging power output, wherein each power storage device 104 can be charged with a square wave pulsed voltage instead of with a constant DC current. This, in turn, facilitates to significantly reduce the charging time of the power storage devices 104, because the possibility of selective charging, which is enabled by the control of the main control circuit in interplay with the configuration of the power conversion devices 106, enhances the degrees of freedom for implementing an optimized charging algorithm and in particular facilitates the implementation of pulse charging algorithms. Additionally, despite charging the power supply system 100 with a high charging power, the voltage-ratings for the electronic components of the power conversion may be kept low, because each power storage module 102 only experiences a fraction of the total charging power supplied by the external charging station (or charging device). Furthermore, by using the power conversion devices 106 in the power supply system 100, it is possible to directly charge the power storage devices 104 either with a DC charging station or an AC charging station and dispense the need for providing an Onboard Charger.

As illustrated in Figs. 6, 7 and 9, the local control circuit 144 repeats the control of the switching devices with the same switching states in each synchronization cycles (i.e. in each period between the reception of two synchronization signals) until the local control circuit 144 receives new control information. Accordingly, the reception of the synchronization signal, provides a timing for synchronize the operation of the plurality of power conversion devices 106. In this respect, it may be possible that a switching cycle, which is a period for which the switching states are determined, may not be equal to the synchronization cycle, but may be a fraction of the synchronization cycle so that the local control circuit 144 repeats the control of the switching devices with the same switching states in each switching cycle, while the synchronization signal is transmitted, for example only every multiple number of switching cycles (like every 10 switching cycles or every 100 switching cycles). In this application scenario the control information transmitted from the main control circuit 142 to the local control circuits 144 may in addition include a switching cycle duration parameter, which indicates a duration of the switching cycle, and which then may be used by the local control circuits 144 to determine the Off-timing (bypass state) and the On timing (supply state) of the respective power conversion devices 106 during each switching cycle.

Turning back to Figs. 3 and 4, the power conversion device 106' and the power conversion device 106" may optionally also comprise a second voltage converter circuit 156, which is electrically connected between the pair of input terminals 128 and 132 and a pair of second output terminals (not shown) of the power conversion device 106. The second voltage converter circuit 156 comprises at least one switching device, e.g. a semiconductor switch like a MOSFET switch or an Insulated-gate bipolar transistor (IGBTs), and is configured to output a second output voltage to the second output terminals, which in the power supply system 100 are electrically connected to the low voltage bus 112. Accordingly, the second voltage converter circuits 156 of the power conversion devices 106 of the power supply system 100 form a voltage converter network, which is configured to convert the module voltages provided by the power storage modules 102 (or at least a part thereof) into a predetermined low DC voltage, e.g. 12 V, 24 V or 48 V, supplied to the low voltage bus 112. Hereby, it is not essential that all of the power conversion devices 106 of the power supply system 100 are equipped with the second voltage converter circuit 156, but also only a fraction of the plurality of power conversion devices 106 of the power supply system 100 may comprise the second voltage converter circuit 156.

As schematically illustrated in Fig. 1, the second voltage converter circuits 156 of different power storage modules 102 are electrically connected by the second output terminals in parallel to each other, so as to serve as parallelized power sources for the low voltage bus 112. To convert the module voltages into the predetermined low voltage, DC-DC converters may be used as the second voltage converter circuits 156. As an example topology for the implementation of each DC-DC converter a phase shifted full bridge converter may be used.

For optimizing the load management between the second voltage converter circuits 156 in the power supply system 100, the local control circuits 144 may function as local controllers, which enable fast response to the load requirements of the low voltage bus 112, and the main control circuit 142 of the power supply system 100 may function as master controller, which globally control a number of power storage modules 102, which supply the low voltage bus 112.

In particular, the local control circuit 144 of a power conversion device 106" regulates the output voltage of the respective second voltage converter circuit 156 based on an actual second output voltage of the power conversion device 106". The actual second output voltage may, for example, be regulated by adapting a voltage transformation ratio of the second voltage converter circuit 156.

The actual second output voltage of the second voltage converter circuit 156 may for example be measured by a measurement circuit of the power conversion device 106. The measurement circuit can be a dedicated measurement circuit or be integrated into the local control circuit 144. In any case, the local control circuit 144 acquires the actual second output voltage output by the power conversion device 106 and generates control signals for the at least one switching device of the second voltage converter circuit 156 to regulate the second output voltage.

In this manner, it can be ensured that the actual second output voltage of each second voltage converter circuit 156 can droop in accordance with the load supplied to the electronic components electrically connected to the low voltage bus 112. In other words, the individual second voltage converter circuit 156 of the plurality of power conversion devices 106 can behave like virtual resistances, and the actual output characteristic of the second voltage converter circuits 156 can be adapted to the load required by the low voltage bus 112, while the required load can be distributed across the individual second voltage converter circuits 156. Accordingly, with this technique fast transient response to a change in the load requirements and a good stability of power supply in the low voltage bus 112 can be achieved.

The main control circuit 142, in addition may determine to activate or deactivate each of the second voltage converter circuits 156 based on the total load requirements in the low voltage bus 112. In accordance with the determination, the main control circuit 142 may transmit activation/deactivation requests to the corresponding local control circuits 144 over the first communication channel. For example, if a large load is supplied by the low voltage bus 112, the main control circuit 142 may enhance the number of activated second voltage converter circuits 156 in the power supply system 100, and if a small load is supplied by the low voltage bus 112, the main control circuit 142 may reduce the number of activated second voltage converter circuits 156 in the power supply system 100.

Similar, the main control circuit 142 may use each of the second voltage converter circuits 156 for performing active balancing of the charges of the power storage devices 104. In this case, the main control circuit 142 may activate and de-activate each of the second voltage converter circuits 156 based on the state of charge (SOC) or voltage of the power storage device 104, to which the respective second voltage converter circuit 156 is electrically connected. For example, if the main control circuit 142 determines that the SOC or the voltage of one of the plurality of power storage device 104 is higher than the SOC or the voltage of the other power storage device 104, the main control circuit 142 may activate the connected second voltage converter circuit 156, and may deactivate the remaining second voltage converter circuits 156, so that the excessive SOC or voltage can be discharged through the low voltage bus 112.

Accordingly, by providing the second voltage converters 156 on the power conversion devices 106, it is possible to directly supply the low voltage bus 112 from the power storage modules 102 and dispense the need for providing an auxiliary battery for supplying the low voltage bus 112. Accordingly, the space and weight requirements in a vehicle power supply system may be further reduced by the implementation of the power conversion devices 106 in the vehicle power supply system.

The division of the power source of the power supply system 100 into power storage modules 102 also has the advantage, that the operation power supply system 100 can be easily maintained in the case of a malfunction, like a hardware fault or a short, in one of the power storage modules 102. Especially, in each power conversion device 106, the local control circuit 144 may be configured to detect a malfunction of one of the electric components of the power conversion device 106 or of the connected power storage device 104. In response to detecting the malfunction, the local control circuit 144 controls the power storage device 104 to be bypassed by the power conversion device 106, and transmits a malfunction signal to the main control circuit 142. The main control circuit 142 can then adapt the sets of switching parameters for the remaining power conversion devices 106, in order to compensate for the failure of a specific power conversion device 106. In addition, the local control circuit 144 may have a configurable timeout function, and if the local control circuit 144 does not receive a communication signal from the main control circuit 142 (over the first communication channel 138 and/or over the second communication channel 140) for a predetermined time ("self-disconnection time"), the local control circuit 144 is configured to control the power storage device 104 to be bypassed by the power conversion device 106.

Furthermore, overcurrent protection devices, which immediately interrupt an overcurrent, like fuses, can be implemented in the circuit of each power conversion device 106, to interrupt the electric connection with the respective power storage device 104, in case of an overcurrent in the power conversion device 106. In this manner, the overcurrent protection may be implemented in each power conversion device 106 locally, so that in case that a malicious overcurrent occurs in one of the power storage modules 102, the remaining power storage modules 102 may still be operated.

In this manner, the performance of the power storage modules 102 can be monitored for each of the power storage modules 102 individually and in case of a malfunction the power storage modules 102 may be disconnected from the power supply system 100, individually. Especially, it may be possible to operate the power supply system 100 even in case of a malfunction in one (or more) of the power storage modules 102, and the service of the power supply system 100 may be simplified, because the power storage modules 102 can be easily replaced in case of a malfunction on an individual level.

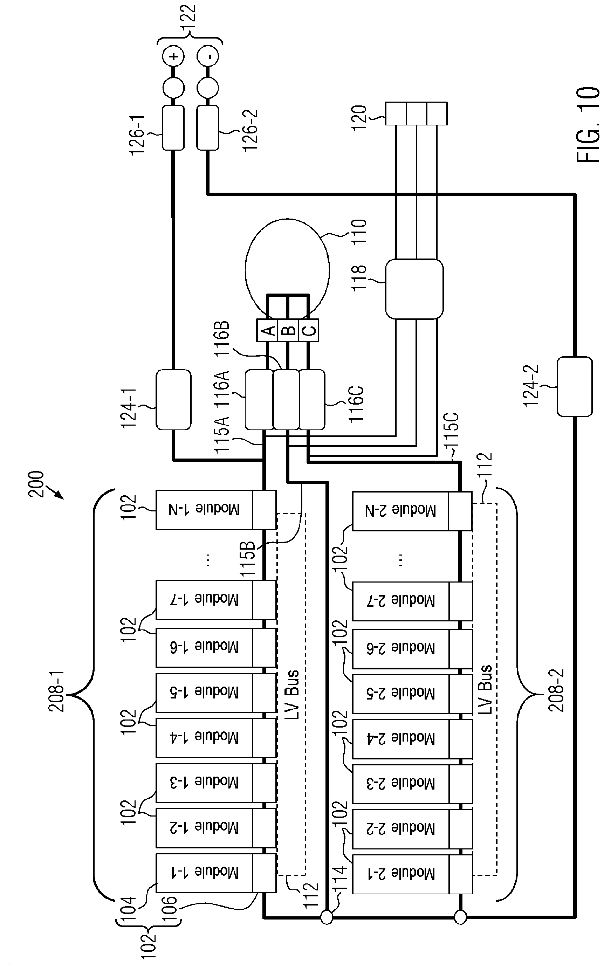

Fig. 10 shows a second exemplary power supply system 200. The second exemplary power supply system 200 is built and operated in the same manner as the first exemplary power supply system 100 with the only difference that the DC charging disconnection device 124-2 is electrically connected between a low potential side terminal (-) of the DC charging terminals 122 and the Module 2-1 of the second battery string 108-2. In this manner, the two battery strings 208-1 and 208-2 are electrically connected in parallel, when charging the power supply system 200 by the DC charging terminals 122, because the Module 1-1 of the first battery string 208-1 is electrically connected through the common reference potential 114 with the Module 2-1 of the second battery string 208-2.

### REFERENCE NUMERALS

| | |
|---|---|
| 100 | Power supply system |
| 102 | Power storage module |
| 104 | Power storage device |
| 106 | Power conversion device |
| 108 | Battery string |
| 110 | Electric motor |
| 112 | Low voltage bus |
| 114 | Reference potential |
| 115A, 115B, 115C | Power supply lines |
| 116A, 116B, 116C | Disconnection devices |
| 118 | AC charging disconnection device |
| 120 | AC charging terminals |
| 122 | DC charging terminals |
| 124-1, 124-2 | DC charging disconnection device |
| 126-1, 126-2 | HV overcurrent protection devices |
| 128, 130 | Input terminals |
| 132, 134 | Output terminals |
| 136 | Communication interface |
| 138 | First communication channel |
| 140 | Second communication channel |
| 142 | Main control circuit |
| 144 | Local control circuit |
| 146 | First voltage converter circuit |
| 148 | First driving circuit |
| 150 | Second driving circuit |
| 154 | Monitoring circuit |
| 156 | Second voltage converter circuit |

## Claims

1. A power conversion device (106), comprising:
a pair of input terminals (128, 130) for electrically connecting a power storage device (104),
a pair of first output terminals (132, 134) for connecting a load (110) or a power source;
a first voltage converter circuit (146), which is electrically connected between the pair of input terminals (132, 134) and the pair of first output terminals (128, 130), wherein the first voltage converter circuit (146) comprises a plurality of switching devices (S1, S2, S3, S4) and is configured to convert an input voltage into a first output voltage having the same or opposite polarity as the input voltage; and
a local control circuit (144), which in operation,
• receives, from a main control circuit (142), control information including a set of switching parameters over a first communication channel (138);
• determines switching states for the plurality of switching devices (S1, S2, S3, S4) of the first voltage converter circuit (146) by using the set of switching parameters;
• receives a synchronization signal over a second communication channel (140); and
• generates control signals for the plurality of switching devices (S1, S2, S3, S4) of the first voltage converter circuit (146) on the basis of the determined switching states and the synchronization signal.

2. The power conversion device (106) according to claim 1, wherein the set of switching parameters comprises a bypass timing parameter (Δt,N, - Δt,N), which indicates a duration of a bypass state of the first voltage converter circuit (146), in which the power storage device (104) is bypassed by the first voltage converter circuit (146), and a supply timing parameter (t,N, - t,N), which indicates a duration of a supply state of the first voltage converter circuit (146), in which the power storage device (104) supplies the first output terminals (132, 134) or is supplied by the first output terminals (132, 134).

3. The power conversion device (106) according to claim 2, wherein the local control circuit (144), in operation,
• controls the first voltage converter circuit (146) to be in the bypass state during a bypass period, which starts from the reception of the synchronization signal and lasts for the duration indicated by the bypass timing parameter, and
• controls the first voltage converter circuit (146) to be in the supply state during a supply period, which follows the bypass period and lasts for the duration indicated by the supply timing parameter.

4. The power conversion device (106) according to one of the preceding claims, wherein the set of switching parameters comprises a conversion ratio parameter, indicating a duty cycle for switching the plurality of switching devices (S1, S2, S3, S4) of the first voltage converter circuit (146).

5. The power conversion device (106) according to one of the preceding claims, further comprising a detection circuit (154), which in operation, detects a state of the power storage device (104) to generate detection data,
wherein the local control circuit (144), in operation
• generates the detection data, and
• transmits the detection data over the first communication channel (138) to the main control circuit (142).

6. The power conversion device (106) according to one of the preceding claims, further comprising
a pair of second output terminals for connecting a second load, and
a second voltage converter circuit (156), which is electrically connected between the pair of input terminals (128, 130) and the pair of second output terminals, wherein the second voltage converter circuit (156) comprises at least one switching device and is configured to convert the input voltage into a second output voltage having the same polarity as the input voltage;
wherein the local control circuit (144), in operation
• acquires the actual second output voltage, and
• generates control signals for the at least one switching device of the second voltage converter circuit (156) on the basis of the actual second output voltage.

7. The power conversion device (106) according to one of the preceding claims, wherein the local control circuit (144), in response to detecting a malfunction of one of the electric components of the power conversion device (106), in operation,
• controls the power storage device (104) to be bypassed by the first voltage converter circuit (146), and
• transmits a malfunction signal to the main control circuit (142).

8. A power conversion method comprising the steps of
• receiving, from a main control circuit (142), control information over a first communication channel (138), wherein the control information include a set of switching parameters for a first voltage converter circuit (146), which comprises a plurality of switching device (S1, S2, S3, S4) and is configured to convert an input voltage into a first output voltage having same or opposite polarity as the input voltage;
• determining switching states for the plurality of switching devices(S1, S2, S3, S4) of the first voltage converter circuit (146) by using the set of switching parameters;
• receiving a synchronization signal over a second communication channel (140); and
• generating control signals for the plurality of switching devices (S1, S2, S3, S4) of the first voltage converter circuit (146) on the basis of the determined switching states and the synchronization signal.

9. A power supply system (100), which comprises
a plurality of power conversion devices (106) according to any of the preceding claims, wherein each of the plurality of power conversion devices (106) is electrically connected to a power storage device (104) and is configured to output a first output voltage; and
a power supply control device, which is communicatively coupled to each local control circuit (144) of the plurality of power conversion devices (106) over a first communication channel (138) and over a second communication channel (140);
wherein the power supply control device comprises a main control circuit (142), which in operation
• determines respective sets of switching parameters for the plurality of power conversion devices (106) and a frequency of the synchronization signal, so as to control the power output of the plurality of power storage devices (104);
• transmits, over the first communication channel (138), to the local controllers (144) of the plurality of power conversion devices (106) control information including the respective sets of switching parameters; and
• transmits to each of the local controllers (144) the synchronization signal over the second communication channel (140).

10. The power supply system (100) according to claim 9, wherein a first part of the plurality of power conversion devices (106) is arranged in a first array (108-1) connected in a cascaded manner and a second part of the plurality of power conversion devices (106) is arranged in a second array (108-2) connected in a cascaded manner, and
wherein the first array (108-1) and the second array (108-2) each comprise a dedicated power output terminal (116A, 116C), which is electrically connected to only one of the first array (108-1) and the second array (108-2), and a shared power output terminal (116-B), which is electrically connected to both the first array (108-1) and the second array (108-2).

11. The power supply system (100) according to one of claims 9 or 10 wherein for charging the power supply system (100), the plurality of power conversion devices (106) are electrically connected in series, and wherein the main control circuit (142), in operation, controls the plurality of power conversion devices (106) to selectively charge the power storage devices (104).

12. The power supply system (100) according to one of claims 9 to 11, wherein the main control circuit (142), in operation,
• receives, from the plurality of power conversion devices (106) over the first communication channel (138), detection data indicating a state of the connected power supply device (104), and
• determines the set of switching parameters for each of the plurality of power conversion devices (106) by using the detection data.

13. The power supply system (100) according to one of claims 9 to 12, wherein the main control circuit (142), in operation
determines, for each of the plurality of power conversion devices (106), whether to activate or to deactivate a second voltage converter circuit (156); and
transmits activation or deactivation requests to the plurality of power conversion devices (106).

14. The power supply system according to one of claims 9 to 13, wherein the main control circuit (142), in operation
determines a waveform of an output voltage signal of the plurality of power conversion devices (106) and sets the frequency of the synchronization signal in accordance with the determined waveform.

15. A power supply control method comprising the steps of:
• determining respective sets of switching parameters for a plurality of power conversion devices (106) and a frequency of a synchronization signal, so as to control the power output of a plurality of power storage devices (104), wherein each of the plurality of power conversion devices (106) is electrically connected to at least one of the plurality of power storage devices (104) and is configured to output a first output voltage;
• transmitting, over a first communication channel (138), to local controllers (142) of the plurality of power conversion devices (106) control information including the respective sets of switching parameters; and
• transmitting to each of the local controllers (142) the synchronization signal over a second communication channel (140).
